# EUROPÄISCHE PATENTSCHRIFT

(11) **EP 0 405 613 B1**
(45) Veröffentlichungstag und Bekanntmachung des Hinweises auf die Patenterteilung: **21.06.1995**
(21) Anmeldenummer: 90112568.2
(22) Anmeldetag: 02.07.1990
(51) Int. Cl.: F04B 39/16, B01D 53/26, F28D 7/00, F28D 20/00

(54) **Wärmetauscher**
Heat exchanger
Echangeur de chaleur

(30) Priorität: 30.06.1989 IT 4164589; 20.03.1990 IT 4156390
(43) Veröffentlichungstag der Anmeldung: 02.01.1991
(73) Patentinhaber: MTA S.R.L, I-35026 Conselve (Padova) (IT)
(72) Erfinder: Bellemo, Luciano, I-35020 Villatora di Saonara (IT); Mantegazza, Mario, I-35020 Villatora di Saonara (IT)
(74) Vertreter: Cantaluppi, Stefano

(56) Entgegenhaltungen:
- EP-A- 0 045 101
- EP-A- 0 067 044
- EP-A- 0 344 351
- DE-A- 2 530 198
- DE-A- 2 536 015
- DE-A- 3 338 922
- FR-A- 2 325 882
- FR-A- 2 474 673
- GB-A- 2 074 305
- US-A- 3 722 583
- US-A- 3 739 594
- US-A- 3 818 718

## Beschreibung

Die Erfindung betrifft einen Wärmetauscher mit Rippenpaketen für Drucklufttrockner.

Bei Anlagen mit Druckgas oder Druckgasmischungen enthält das Gas, das vom Kompressor kommt, eine erhebliche Menge von Wasser in Form von Wasserdampf. Da dieses Wasser schädlich ist, muß es kondensiert und abgeführt werden.

Aus der US-A 3 722 583 ist ein Wärmetauscher bekannt, der zum Trocknen komprimierter Luft dient, deren Anfangswärme in einem Vorkühler ausgenutzt wird, um die getrocknete und gekühlte Luft am Ausgang wieder aufzuwärmen. Hinter dem Vorkühler wird die Luft durch Kühlschlangen mit einem darin stromenden Kühlmedium abgekühlt und von der Feuchtigkeit in einem Separator befreit. Die Wärmeübertragung zwischen den Rohrleitungen im Vorkühler und in dem eigentlichen Wärmetauscher erfolgt ausschließlich über Wärmestrahlung.

In der EP-A 45 101 ist ein Drucklufttrockner beschrieben und dargestellt, in dem die einströmende feuchte Luft über einen Ringraum zwischen zwei konzentrisch ineinanderliegenden Rohren in ein Eiswasserbad geleitet wird, das durch Kühlschlangen auf einer niedrigen Temperatur gehalten wird.

Die EP-A 344 351 bezieht sich auf einen Gas-Kältemittel-Wärmetauscher, der als Drucklufttrockner verwendet werden kann und der aus einer Rohrschlange für das zu kühlende Gas und einer Rohrschlange für das Kältemittel besteht. Beide Rohrschlangen sind als kegelförmige Wendel ausgebildet und in direktem Wärmeübertragungskontakt ineinander angeordnet. Diese Konstruktion ist in der Herstellung sehr aufwendig.

Der Erfindung liegt die Aufgabe zugrunde, ausgehend von der US-A 3 722 583 einen zum Trocknen von Druckluft dienenden Wärmetauscher einfacher zu fertigen bzw. so zu verbessern, daß die Wärmeübertragung und damit der Wirkungsgrad wesentlich verbessert werden.

Diese Aufgabe wird durch die Merkmale des Patentanspruchs 1 gelöst. Mit der Maßnahme, Rippenpakete vorzusehen, durch deren zueinander parallele Rippen die Rohre hindurchlaufen, wird eine Oberflächenvergrößerung der einander berührenden Teile und damit ein intensiver Wärmeaustausch durch Wärmeleitung erzielt. Die beiden Medien durchlaufen dabei zwei Kreise, die einen optimalen Abstand zueinander aufweisen. Der Wärmetausch kann dabei auch über die Leerräume zwischen den Rohren und Rippen erfolgen.

Bei der im Anspruch 2 angegebenen Weiterbildung der Erfindung wird ein Rippenpaket ausgenutzt, um in optimaler Weise mit Hilfe des trockenen Gases am Ausgang das feuchte Gas am Eingang vorzukühlen. Der Gaskreislauf ist dabei so angeordnet, daß der Eingangsabschnitt für das Gas sehr nahe am Ausgangsabschnitt für das Gas liegt. Damit wird ein Wärmeaustausch zwischen dem feuchten Gas am Eingang und dem trockenen Gas am Ausgang erzielt. Das feuchte Gas am Eingang kühlt sich dabei ab und gibt Wärme an das trockene Gas am Ausgang ab, welches sich dadurch erwärmt.

Zwischen die Rippen kann eine Materialmasse gefüllt sein, die mit Wasser oder anderen Flüssigkeiten imprägniert ist, wodurch so die Wärmeleitfähigkeit dieser Masse als auch deren Wärmeträgheit erhöht werden.

Wenn eine mit Wasser getränkte Masse verwendet wird, kann diese auf eine Temperatur von weniger als 0°C gebracht werden, wodurch das Wasser gefriert; das gefrierende Wasser erhöht die Wärmekapazität der Masse erheblich, und zwar aufgrund der latenten Schmelzwärme des Wassers.

Wenn das abzukühlende Medium komprimierte, feuchte Luft ist, ergibt sich das Problem, daß das Wasser, welches während des Abkühlens kondensiert, nicht gefrieren darf, selbst wenn die thermische Masse gerade vereist. Da der Wärmeaustauschprozeß aufgrund eines Temperaturgradienten abläuft, kann die Temperatur der thermischen Masse so gesteuert werden, daß der Kompressor abschaltet, bevor sich in den Rohren, in denen die komprimierte Luft strömt, eine gefährliche Eisbildung einstellt.

Wenn man Sonden in Berührung mit dem Rippenpaket und in die thermische Masse bringt, kann deren Temperatur so geregelt werden, daß die Temperatur des zu kühlenden Mediums nahezu konstant gehalten wird.

Das Eis, das in der Masse zwischen den Rippen vorhanden ist, erhöht deren Wärmekapazität erheblich, verringert die mittlere Arbeitstemperatur des Systems und verlängert die Schwankungsperioden der Temperatur und damit die Häufigkeit der Ein- und Ausschaltvorgänge des Kompressors im Verlauf einer Zeiteinheit.

Die Erfindung ist nachstehend an drei Ausführungsbeispielen erläutert, die in der Zeichnung dargestellt sind. Es zeigen:
Figur 1 das schematische Schaltbild eines ersten Ausführungsbeispiels,
Figur 2 das schematische Schaltbild eines zweiten Ausführungsbeispiels und
Figur 3 die Schemadarstellung eines dritten Ausführungsbeispiels in Form eines Trockners mit kälteerzeugendem Kreislauf für Druckluft.

In vorteilhafter Weise werden Rippenpakete mit Kupferrohren verwendet, beispielsweise von 3/8", wobei die gegenseitigen Mittenabstände (horizontal x vertikal) optimal 25 x 12,5 sind, aber auch 25 x 22 oder 25 x 19 sein können; die Rippen sind aus Aluminium oder Kupfer und haben einen Abstand von 1,5 mm, höchstens 4 mm. Die besten Ergebnisse werden mit Rippen erzielt, die einen Abstand von 1,5 mm haben, wobei die o.a. Abstände der Rohre 25 x 12,5 betragen.

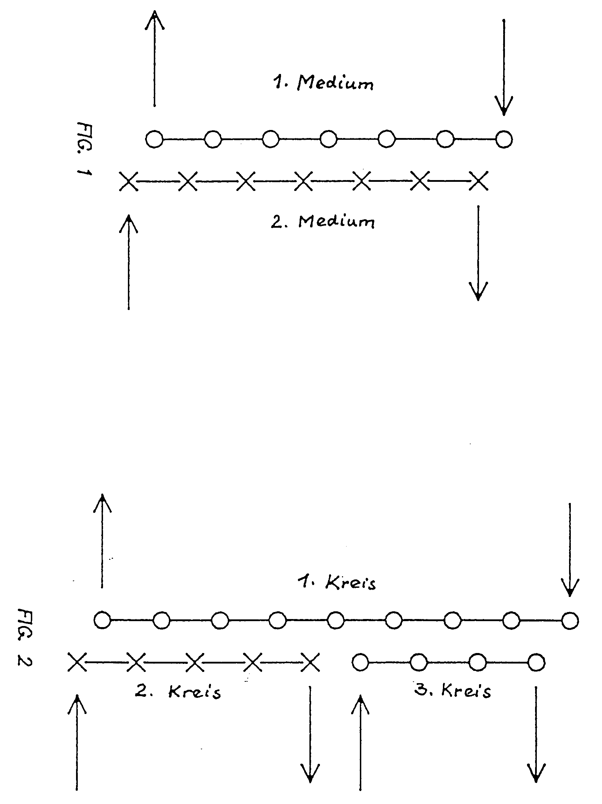

Figur 1 zeigt das Funktionsschema eines Rippenpaketes, wobei mit einem Kreis die Rohre dargestellt sind, in denen die zu trocknende Luft strömt, während mit einem Kreuz die Rohre symbolisiert werden, durch die das Kühlmedium strömt. Die Rohre der Strömungskreise laufen rechtwinklig durch eine Reihe von parallelen Rippen, die das Rippenpaket bilden.

Da zwischen dem ersten Medium und den Rohren, die das zweite Medium aufnehmen, kein unmittelbarer Kontakt besteht, sind die beiden Kreise sehr nahe nebeneinander verlegt und beispielsweise schachbrettartig zueinander versetzt, um einen sehr wirkungsvollen Wärmeaustausch zu erzielen. Die Rippen bestehen aus einem Werkstoff hoher Leitfähigkeit, beispielsweise Aluminium oder Kupfer, und liegen sehr nahe beieinander.

Bei Trocknern für Druckluft mit kälteerzeugendem Kreislauf, bei denen zusätzlich zu dem Verdampfer auch ein Luft/Luft-Wärmetauscher verwendet wird, besteht die Besonderheit der Erfindung darin, daß die Rippen drei Kreisläufen zugeordnet sind.

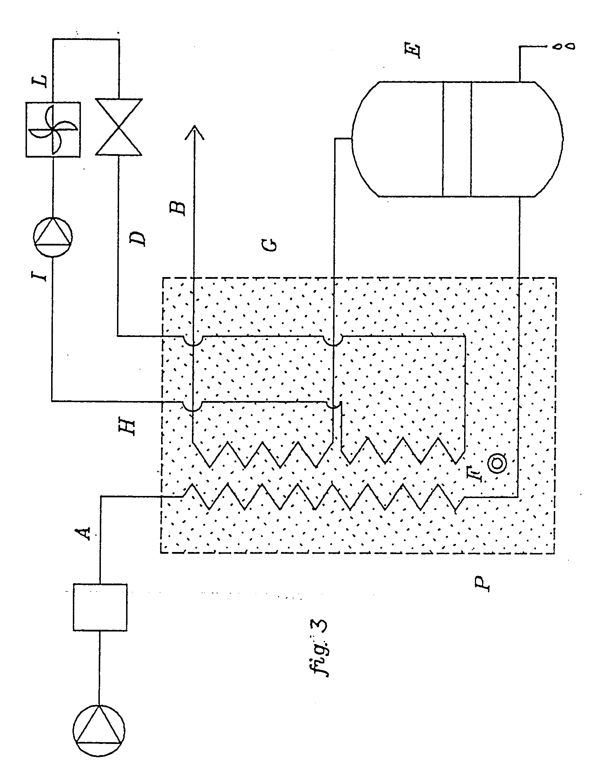

Figur 2 zeigt das Schemabild eines derartigen Rippenpaketes. Die Luft am Eingang des Trockners strömt in den ersten Kreis, wobei sie sich in einem Anfangsabschnitt abkühlt und Wärme mit der Druckluft austauscht, die aus diesem ersten Kreis ausgetreten ist, während sie sich im letzten Abschnitt des ersten Kreislaufes abkühlt und dabei Wärme mit dem kälteerzeugenden, verdampfenden Medium, welches durch den zweiten Kreislauf strömt, austauscht; anstelle des verdampfenden, kälteerzeugenden Mediums kann auch eine andere Flüssigkeit verwendet werden, beispielsweise Glykolat-Wasser, das auf eine ausreichend niedrige Temperatur gebracht worden ist. Dabei wird ein einziges, sehr kompaktes Rippenpaket verwendet, das zwei Wärmetauscher miteinander verbindet und das auch einen metallischen Übergang zwischen beiden Wärmetauschern gewährleistet, wodurch die Leistungen weiter erhöht werden.

Die feuchte Luft, die eine Temperatur von etwa 40°C hat, beginnt sich bereits im Abschnitt I abzukühlen, bevor sie mit dem kälteerzeugenden Medium in Berührung kommt. Die Luft hat am Ausgang des ersten Kreislaufes eine Temperatur von etwa 3°C (Taupunkt) und gibt den flüssigen Anteil ab, während die trockene Luft, die eine Temperatur von etwa 3°C hat, bevor sie abgegeben wird, durch die Serpentinen strömt (Abschnitt III), welche in Berührung mit der Feuchtluft am Eingang verlegt sind. Die trockene Luft nimmt von der Luft am Eingang Wärme auf und erwärmt sich bis zu einer Temperatur von etwa 20 bis 30°C.

Es besteht die Möglichkeit, daß die beschriebenen Wärmetauscher eine thermische Masse aufweisen, und zwar in Abhängigkeit von dem Regelungssystem des Kältekreislaufes, der für eine gute Funktion der zwischen 0 % und 100 % variablen Kühlbelastungen so realisiert sein kann, daß er die Wärmeeinheiten ableitet, die vom Kompressor kommen und überschüssig sind (in diesem Fall ist keine thermische Masse notwendig) oder der so konstruiert sein kann, daß er die überschüssigen Wärmeeinheiten in einer thermischen Masse speichert.

Die thermische Masse kann fluide oder feste Stoffe geringer Korngröße aufweisen, die ausreichend klein sind, um die Auffüllung der Hohlräume zwischen den Rohren und Rippen zu gewährleisten; die Feststoffe können beispielsweise Sand, Metallpulver oder dergleichen sein, und zwar sowohl im trockenen als auch im feuchten Zustand; sie können aber auch Zementagglomerate oder hydraulischer Kalk sein.

Die hohe Dichte der Rippen gewährleistet einen ausgezeichneten Wärmeaustausch auch dann, wenn die thermische Masse vorhanden ist, die mit den erwähnten Werkstoffen niedriger Wärmeleitfähigkeit verwirklicht ist. Diese Werkstoffe sind billig, vollkommen ungiftig und leicht zu handhaben und einzufüllen.

Figur 3 zeigt ein Schaltbild eines Trockner, wobei mit A die Eingangsleitung für die feuchte Luft und mit B die Leitung für die trockene Luft am Ausgang bezeichnet sind. Die schlangenförmigen Leitungen sind sehr nahe beieinander verlegt, so daß die Leitung A mit der zu kühlenden Luft Wärme an die Leitung B mit der trockenen Luft am Ausgang abgibt, und zwar über die Rippen der Pakete, so daß die trockene Luft in der Leitung B wärmer wird, während die komprimierte Feuchtluft in der Leitung A abkühlt. Die Kühlschlange A, die von der abzukühlenden Luft durchströmt wird, gelangt schließlich in die Nähe der Leitungen D, die vom Kühlmittel durchströmt sind.

Mit E ist ein Kondensatabscheider bezeichnet, während F ein Thermostat ist, der die Temperatur der Materialmasse G regelt, welche zwischen den Rohren D für das Kühlmittel, A für das zu kühlende Fluid und B für das bereits gekühlte Fluid verlegt ist. Die Rohrschlangen und der feuchte Sand sind in einem Gehäuse aufgenommen, dessen Wände aus wärmedämmendem Material P gebildet und/oder damit beschichtet sind. Die Masse des feuchten Materials, das gefriert, hat die Aufgabe, Energie zu speichern und sie anschließend dann, wenn das Kühlmittel nicht zirkuliert, an das zu kühlende Medium abzugeben, wodurch die Frequenz der Arbeitszyklen des Kompressors reduziert wird.

## Patentansprüche

1. Wärmetauscher für Drucklufttrockner, bei dem ein Kühlmittel feuchter Druckluft Wärme entzieht und der einen ersten Kreislauf, durch den die feuchte Druckluft strömt, sowie einen zweiten Kreislauf aufweist, durch den das Kühlmittel strömt, wobei der erste und der zweite Kreislauf eine erste bzw. eine zweite Gruppe parallel nebeneinanderliegender Rohre haben, **dadurch gekennzeichnet**, daß ein erstes Rippenpaket aus mit Abstand parallel nebeneinander angeordneten Rippen vorgesehen ist, die rechtwinklig zu den Rohren des ersten und des zweiten Kreislaufs angeordnet sind und dadurch einen bevorzugten Wärmeübertragungsweg zwischen dem Kühlmittel und der Druckluft herstellen.

2. Wärmetauscher nach Anspruch 1, **dadurch gekennzeichnet**, daß ein dritter Kreislauf vorgesehen ist, in dem bereits getrocknete Druckluft strömt und der eine dritte Gruppe von Rohren hat, die parallel neben einer Untergruppe der Rohre des ersten Kreislaufs angeordnet ist, und daß ein zweites Rippenpaket ebenfalls ein Paket von mit Abstand parallel nebeneinanderliegenden Rippen hat, die rechtwinklig zur dritten Gruppe und der Untergruppe der Rohre angeordnet sind und dadurch einen bevorzugten Wärmeübertragungsweg zwischen der feuchten und der trockenen Druckluft herstellen.

3. Wärmetauscher nach Anspruch 2, **dadurch gekennzeichnet**, daß jede Rippe des ersten Rippenpaketes durchgehend fest mit der entsprechenden Rippe des zweiten Rippenpakets verbunden ist.

4. Wärmetauscher nach Anspruch 2 oder 3, **dadurch gekennzeichnet**, daß sich zwischen den Rippen eine thermische Masse aus einem Material hoher Wärmekapazität befindet, das während des Betriebs des Wärmetauschers bei einem Betriebszustand von über die Zeit unterschiedlichen Belastungen die Wärme alternierend speichert und abgibt.

5. Wärmetauscher nach Anspruch 4, **dadurch gekennzeichnet**, daß das Material hoher Wärmekapazität aus einem Feststoff geringer Korngröße besteht.

6. Wärmetauscher nach Anspruch 5, **dadurch gekennzeichnet**, daß das Material geringer Korngröße aus Sand besteht.

7. Wärmetauscher nach Anspruch 6, **dadurch gekennzeichnet**, daß der Sand mit Wasser oder anderen Flüssigkeiten getränkt ist, die während des Betriebs des Wärmetauschers alternierend aus dem festen in den flüssigen Zustand übergehen können.

## Claims

1. Heat exchanger for compressed air driers, in the case of which a coolant extracts heat from moist compressed air and which has a first circuit through which the moist compressed air flows and a second circuit through which the coolant flows, the first and the second circuits having, respectively, a first and a second group of tubes which are arranged parallel and adjacent to one another, characterised in that a first set of ribs is provided which comprises ribs which are arranged spaced apart and parallel and adjacent to one another and which are arranged at right-angles to the tubes of the first and second circuits and thereby provide a preferred heat transfer path between the coolant and the compressed air.

2. Heat exchanger according to Claim 1, characterised in that a third circuit is provided in which flops already dried compressed air and which has a third group of tubes which is arranged parallel and next to a subsidiary group of tubes of the first circuit, and in that a second set of ribs likewise has a set of ribs which are arranged spaced apart and parallel and adjacent to one another and which are arranged at right-angles to the third group and the subsidiary group of tubes and thereby provide a preferred heat transfer path between the moist and the dry compressed air.

3. Heat exchanger according to Claim 2, characterised in that each rib of the first set of ribs is securely connected in continuous manner to the corresponding rib of the second set of ribs.

4. Heat exchanger according to Claim 2 or 3, characterised in that there is arranged between the ribs a thermal mass comprising a material having a high thermal capacity which, during the operation of the heat exchanger, in the case of an operating state of loads varying over time, alternately stores and emits heat.

5. Heat exchanger according to Claim 4, characterised in that the material having a high thermal capacity comprises a solid material having a small particle size.

6. Heat exchanger according to Claim 5, characterised in that the material of small particle size comprises sand.

7. Heat exchanger according to Claim 6, characterised in that the sand is saturated with water or other fluids which can pass alternately from the solid state to the fluid state during the operation of the heat exchanger.

## Revendications

1. Echangeur de chaleur pour séchoirs à air comprimé, dans lequel un agent réfrigérant retire la chaleur d'air comprimé humide et qui présente un premier circuit dans lequel circule l'air comprimé humide ainsi qu'un second circuit dans lequel circule l'agent réfrigérant, le premier et le second circuits présentant respectivement un premier et un second groupes de tubes côte à côte parallèles, caractérisé en ce qu'il est prévu une première rangée de nervures composée de nervures côte à côte parallèles et séparées par une certaine distance, qui sont perpendiculaires aux tubes du premier et du second circuits et constituent ainsi une voie préférée de transfert de chaleur entre l'agent réfrigérant et l'air comprimé.

2. Echangeur de chaleur selon la revendication 1, caractérisé en ce qu'il est prévu un troisième circuit dans lequel circule de l'air comprimé déjà séché et qui présente un troisième groupe de tubes, lequel est parallèle à un sous-groupe de tubes du premier circuit et en ce qu'une seconde rangée de nervures présente également une rangée de nervures côte à côte parallèles séparées par une certaine distance et qui sont perpendiculaires au troisième groupe et au sous-groupe de tubes et constituent ainsi une voie préférée de transfert de chaleur entre l'air comprimé humide et l'air comprimé sec.

3. Echangeur de chaleur selon la revendication 2, caractérisé en ce que chaque nervure de la première rangée de nervures est solidaire en permanence de la nervure correspondante de la seconde rangée de nervures.

4. Echangeur de chaleur selon la revendication 2 ou 3, caractérisé en ce qu'une masse thermique en un matériau à capacité thermique élevée qui emmagasine et cède alternativement de la chaleur pendant le fonctionnement de l'échangeur de chaleur en cas de régime de charges variant au fil du temps se trouve entre les nervures.

5. Echangeur de chaleur selon la revendication 4, caractérisé en ce que le matériau à capacité thermique élevée est constitué par un solide de granulométrie faible.

6. Echangeur de chaleur selon la revendication 5, caractérisé en ce que le matériau de granulométrie faible se compose de sable.

7. Echangeur de chaleur selon la revendication 6, caractérisé en ce que le sable est imbibé d'eau ou d'autres liquides qui peuvent passer alternativement de l'état solide à l'état liquide au cours du fonctionnement de l'échangeur de chaleur.
